# EUROPEAN PATENT SPECIFICATION

(11) **EP 3 115 602 B1**
(45) Date of publication and mention of the grant of the patent: **02.01.2019**
(21) Application number: 16165809.1
(22) Date of filing: 18.04.2016
(51) Int. Cl.: F03D 15/00, F16H 61/4043, F16H 61/4052

(54) **HYDRAULIC TRANSMISSION, POWER GENERATING APPARATUS OF RENEWABLE-ENERGY TYPE, AND METHOD OF OPERATING THE SAME**
HYDRAULIKGETRIEBE, VORRICHTUNG ZUR STROMERZEUGUNG AUS ERNEUERBARER ENERGIE UND VERFAHREN ZUM BETRIEB DAVON
TRANSMISSION HYDRAULIQUE, APPAREIL DE GÉNÉRATION D'ÉNERGIE DE TYPE RENOUVELABLE ET PROCÉDÉ DE FONCTIONNEMENT ASSOCIÉ

(30) Priority: 08.07.2015 JP 2015137182
(43) Date of publication of application: 11.01.2017
(73) Proprietor: Mitsubishi Heavy Industries, Ltd., Tokyo 108-8215 (JP)
(72) Inventor: Teramoto, Yoshinori, Tokyo, 108-8215 (JP)
(74) Representative: Henkel, Breuer & Partner

(56) References cited:
- EP-A1- 2 253 842
- EP-A1- 2 889 514
- WO-A1-2013/191556

## Description

### TECHNICAL FIELD

The present disclosure relates to a hydraulic transmission including a combination of a hydraulic pump and a hydraulic motor, a power generating apparatus of renewable-energy type including the hydraulic transmission, and a method of operating the hydraulic transmission and the power generating apparatus of renewable energy type.

### BACKGROUND ART

A conventionally known hydraulic transmission includes a hydraulic pump and a hydraulic motor. A general hydraulic transmission is configured such that a hydraulic pump converts mechanical rotational energy of a rotation shaft (input shaft) into fluid energy of working oil, and a hydraulic motor converts fluid energy of working oil into mechanical rotational energy of a rotation shaft (output shaft).

For instance, US 2010/0032959A discloses a wind turbine power generating apparatus equipped with a hydraulic transmission including a hydraulic pump driven by rotation of a rotor, a hydraulic motor connected to a generator, and a working-oil channel disposed between the hydraulic pump and the hydraulic motor. In the above hydraulic transmission, the hydraulic pump includes a plurality of sets of pistons and cylinders, a cam that slides the pistons cyclically in the cylinders, and high-pressure valves and low-pressure valves opened and closed in accordance with the timing of the reciprocating motion of the pistons. Each piston is latched in the vicinity of the top dead center to switch the state of a working chamber surrounded by the piston and a cylinder to the non-active state, thereby changing the displacement of the hydraulic pump.

Further, WO 2007/053036A also discloses a configuration of a wind turbine power generating apparatus equipped with a hydraulic transmission. The hydraulic transmission includes a combination of a hydraulic pump of fixed displacement type in which the displacement is fixed and a hydraulic motor of variable-displacement type in which the displacement is adjustable to control an output.

EP 2889514 A1, which constitutes the closest prior art for independent claims 1, 7 and 11, discloses an hydraulic transmission, a power generating apparatus of renewable energy type and an operation method thereof. The hydraulic transmission has a hydraulic pump with a variable displacement configured to be driven by mechanical energy input through a rotation shaft. The transmission also has a hydraulic motor configured to be driven by the pressurized oil supply formed hydraulic pump and high-pressure and low-pressure oil lines respectively connecting the outlets and inlets of the hydraulic pump and of the hydraulic motor. The hydraulic transmission has a bypass line connecting the high-pressure oil line and the low-pressure oil line and a bypass valve disposed in the bypass line, as well as a bypass-valve control part for controlling the opening degree of the bypass valve. The valves respectively connecting the high-pressure oil line and the low-pressure oil line with the working chambers in the plurality of cylinders are such that in one of the working chambers of the transmission at least one of the high-pressure valves or the low-pressure valves is constituted by a valve whose opening and closing is actively controllable whereas the other valves can be passive or check valves.

### SUMMARY

Meanwhile, to provide a hydraulic pump of variable-displacement type as described in US 2010/0032959A, it is necessary to provide an active valve including an actuator to switch the state of a working chamber of the hydraulic pump between an active state and a non-active state. A hydraulic pump normally includes a number of working chambers. Thus, as many actuators as the working chambers need to be provided, which causes the cost to increase. On the other hand, as described in WO 2007/053036A, if a hydraulic pump of fixed-displacement type is used, while it is possible to reduce the cost, a torque cannot be controlled by the hydraulic pump, which may decrease control flexibility of the hydraulic transmission.

In view of this, an object of the present invention is to provide a hydraulic transmission, a power generating apparatus of renewable-energy type, and a method of operating the hydraulic transmission and the power generating apparatus of renewable-energy type, whereby it is possible to reduce the apparatus cost while securing control flexibility.

A hydraulic transmission according to the present invention comprises the features of claim 1, including: a hydraulic pump of fixed-displacement type configured to be driven by mechanical energy inputted into a rotation shaft; a hydraulic motor configured to be driven by pressurized oil from the hydraulic pump; a high-pressure oil line disposed between an outlet of the hydraulic pump and an inlet of the hydraulic motor, for guiding the pressurized oil from the hydraulic pump to the hydraulic motor; a low-pressure oil line disposed between an outlet of the hydraulic motor and an inlet of the hydraulic pump, for guiding working oil from the hydraulic motor to the hydraulic pump, the working oil having a pressure lower than a pressure of the pressurized oil; a bypass line connecting the high-pressure oil line and the low-pressure oil line; a bypass valve disposed in the bypass line; and a bypass-valve control part configured to control the bypass valve to adjust the pressure of the pressurized oil in the high-pressure oil line. The bypass-valve control part is configured to control the pressure of the pressurized oil in the high-pressure oil line to adjust a torque of the hydraulic pump to a target value corresponding to a rotation speed of the hydraulic pump, in accordance with a predetermined correlation between the rotation speed of the hydraulic pump and the torque of the hydraulic pump.

With the above hydraulic transmission, it is possible to reduce the apparatus cost while securing control flexibility of the hydraulic transmission.

Specifically, since the above hydraulic transmission includes a hydraulic pump of fixed displacement type, it is unnecessary to provide a component for controlling the displacement of the hydraulic pump, such as an active control valve, which makes it possible to reduce the apparatus cost of the hydraulic transmission.

Further, the bypass valve is disposed in the bypass line connecting the high-pressure oil line and the low-pressure oil line so that a pressure of the pressurized oil in the high-pressure oil line, which is referred to in short as "a pressure of the high-pressure oil line" hereinafter, is adjustable through control of the bypass valve by the bypass-valve control part. Thus, it is possible to control the torque of the hydraulic pump using the pressure of the high-pressure oil line. At this time, the pressure of the high-pressure oil line is controlled in accordance with a predetermined correlation between the rotation speed of the hydraulic pump and the torque of the hydraulic pump to adjust the torque of the hydraulic pump to the target value corresponding to the rotation speed of the hydraulic pump. In this way, it is possible to set the torque of the hydraulic pump to an appropriate value, which makes it possible to secure control flexibility of the hydraulic transmission.

Further, while it is required to control each of a plurality of active control valves individually in a case where a hydraulic pump of variable displacement type is used, it is possible to adjust the torque by controlling the bypass valve in the above hydraulic transmission, which makes it possible to simplify control of the hydraulic transmission.

In the above configuration, the hydraulic pump comprises a plurality of pistons, a plurality of cylinders configured to guide the respective pistons reciprocably and forming a plurality of working chambers with the plurality of pistons, and high pressure valves and low pressure valves provided for the plurality of working chambers. The high pressure valves are check valves configured to permit only a flow of the working oil flowing from the working chambers to the high-pressure oil line. The low pressure valves are check valves configured to permit only a flow of the working oil flowing from the low-pressure oil line to the working chambers.

With the above configuration, a check valve is used as the high-pressure valve and the low-pressure valve provided for each of the plurality of working chambers of the hydraulic pump, which makes it possible to switch inflow and outflow of working oil with respect to each working chamber in accordance with the pressure of the high-pressure oil line adjusted by the bypass-valve control part without controlling each valve individually. Further, a check valve has a weight smaller than that of an active control valve used in a hydraulic pump of variable-displacement type, for instance, and thus it is possible to reduce the weight of the hydraulic transmission with the above configuration.

In the above configuration, the bypass-valve control part is configured to, if a rotation speed of the rotation shaft is not higher than a rated rotation speed, adjust the torque of the hydraulic pump to the target value on the basis of an optimum operation curve which defines a relationship between the rotation speed of the rotation shaft and the torque of the hydraulic pump.

With the above configuration, the torque of the hydraulic pump is adjusted on the basis of the optimum operation curve, which makes it possible to adjust the torque to an appropriate value. For instance, in a case where the hydraulic transmission is incorporated into the power generating apparatus of renewable-energy type, it is possible to achieve the optimum operation of the power generating apparatus of renewable energy type.

In some embodiments, the bypass-valve control part is configured to control the bypass valve to be fully open, at least when the hydraulic pump in a stopped state is started to rotate during a startup of the hydraulic transmission.

With the above configuration, during a startup of the hydraulic transmission, the bypass valve is controlled to be fully open at least when the hydraulic pump in a stopped state starts to rotate, which makes it possible to bring the load torque of the hydraulic transmission closer to zero and to facilitate startup of the hydraulic pump.

In some embodiments, the bypass-valve control part is configured to control the bypass valve so as to achieve a pressure of the pressurized oil in the high-pressure oil line, the pressure being such that an initial torque required to start rotation of the hydraulic motor in a stopped state is obtainable, after rotation of the hydraulic pump is started, during a startup of the hydraulic transmission.

With the above configuration, even in a case where a predetermined initial torque is required to start the hydraulic motor, the required initial torque is secured by adjusting the pressure of the high-pressure oil line through control of the bypass valve. In this way, it is possible to start the hydraulic motor smoothly.

A power generating apparatus of renewable-energy type according to the present invention comprises the features of claim 5 including: at least one blade; a rotation shaft configured to be rotated by renewable energy received by the at least one blade; a generator configured to generate electric power using rotational energy of the rotation shaft; and the hydraulic transmission according to the invention configured to transmit the rotational energy of the rotation shaft to the generator.

With the above power generating apparatus of renewable-energy type, since the above hydraulic transmission includes the hydraulic pump of fixed displacement type, it is unnecessary to provide a component for controlling the displacement of the hydraulic pump, such as an active control valve, which makes it possible to reduce the apparatus cost of the hydraulic transmission, and thus to make the power generating apparatus of renewable-energy type less expensive.

Further, as described above, the bypass valve is disposed in the bypass line connecting the high-pressure oil line and the low-pressure oil line so that the pressure of the high-pressure oil line is adjustable through control of the bypass valve by the bypass-valve control part. Thus, it is possible to control the torque of the hydraulic pump using the pressure of the high-pressure oil line. At this time, the pressure of the high-pressure oil line is controlled in accordance with a predetermined correlation between the rotation speed of the hydraulic pump and the torque of the hydraulic pump to adjust the torque of the hydraulic pump to the target value corresponding to the rotation speed of the hydraulic pump. In this way, it is possible to set the torque of the hydraulic pump to an appropriate value, which makes it possible to secure control flexibility of the hydraulic transmission.

Further, it is possible to simplify control of the hydraulic transmission, which makes it possible to reduce a control load of the power generating apparatus of renewable-energy type as a whole.

In some embodiments, the power generating apparatus of renewable-energy type is a wind turbine power generating apparatus configured to generate electric power at the generator by utilizing wind energy received from wind by the at least one blade, the wind being a renewable energy source.

With the above configuration, it is possible to reduce the apparatus cost of the wind turbine power generating apparatus, and to generate power utilizing wind energy efficiently.

A method of operating a hydraulic transmission according to the present invention has the features of claim 7 and is for a hydraulic transmission comprising a hydraulic pump of fixed-displacement type configured to be driven by mechanical energy inputted into a rotation shaft; a hydraulic motor of variable-displacement type configured to be driven by pressurized oil from the hydraulic pump; a high-pressure oil line disposed between an outlet of the hydraulic pump and an inlet of the hydraulic motor; a low-pressure oil line disposed between an outlet of the hydraulic motor and an inlet of the hydraulic pump; a bypass line connecting the high-pressure oil line and the low-pressure oil line; and a bypass valve disposed in the bypass line. The method comprises: a torque adjustment step of controlling a pressure of the pressurized oil in the high-pressure oil line by controlling the bypass valve to adjust a torque of the hydraulic pump to a target value corresponding to a rotation speed of the hydraulic pump, in accordance with a predetermined correlation between the rotation speed of the hydraulic pump and the torque of the hydraulic pump.

According to the above method of operating the hydraulic transmission, in the torque adjustment step, the pressure of pressurized oil in the high-pressure oil line is controlled by controlling the bypass valve in accordance with the predetermined correlation between the rotation speed of the hydraulic pump and the torque of the hydraulic pump, which makes is possible to set the torque of the hydraulic pump to an appropriate value and to secure control flexibility of the hydraulic transmission.

Further, while it is required to control each of a plurality of active control valves individually in a case where a hydraulic pump of variable displacement type is used, it is possible to adjust the torque by controlling the bypass valve in the above hydraulic transmission, which makes it possible to simplify control of the hydraulic transmission, and to reduce a control load of the power generating apparatus of renewable-energy type as a whole.

Further, since the above hydraulic transmission includes the hydraulic pump of fixed displacement type, it is unnecessary to provide a component for controlling the displacement of the hydraulic pump, such as an active control valve, which makes it possible to reduce the apparatus cost of the hydraulic transmission, and thus to make the power generating apparatus of renewable-energy type less expensive.

In the above method, the torque adjustment step comprises controlling the pressure to adjust the torque of the hydraulic pump to the target value on the basis of an optimum operation curve which defines a relationship between the rotation speed of the rotation shaft and the torque of the hydraulic pump if the rotation speed of the rotation shaft is not higher than a rated rotation speed.

According to the above method, the torque of the hydraulic pump is adjusted on the basis of the optimum operation curve, which makes it possible to adjust the torque to an appropriate value. For instance, in a case where the hydraulic transmission is incorporated into the power generating apparatus of renewable-energy type, it is possible to achieve optimum operation of the power generating apparatus of renewable energy type.

In some embodiments, the method further comprises a rotation start step of starting rotation of the hydraulic pump while the bypass valve is controlled to be fully open, during a startup of the hydraulic transmission.

According to the above method, during a startup of the hydraulic transmission, the bypass valve is controlled to be fully open at least when the hydraulic pump in a stopped state starts closer to rotate, which makes it possible to bring the load torque of the hydraulic transmission to zero and to facilitate startup of the hydraulic pump.

In some embodiments, the method further comprises a pressure-increase step of controlling the bypass valve so as to achieve a pressure of the pressurized oil in the high-pressure oil line, the pressure being such that an initial torque required to start rotation of the hydraulic motor in a stopped state is obtainable, after rotation of the hydraulic pump is started, during a startup of the hydraulic transmission.

According to the above method, even in a case where a predetermined initial torque is required to start the hydraulic motor, the required initial torque is secured by adjusting the pressure of the high-pressure oil line through control of the bypass valve. In this way, it is possible to start the hydraulic motor smoothly.

A method of operating the power generating apparatus of renewable-energy type according to the present invention has the features of claim 11 and is for the power generating apparatus of renewable energy type according to the invention. The method comprises a torque adjustment step of controlling a pressure of the pressurized oil in the high-pressure oil line to adjust a torque of the hydraulic pump to a target value corresponding to a rotation speed of the hydraulic pump, in accordance with a predetermined correlation between the rotation speed of the hydraulic pump and the torque of the hydraulic pump.

According to the above method of operating the power generating apparatus of renewable-energy type, in the torque adjustment step, the pressure of the high-pressure oil line is adjustable by controlling the bypass valve in accordance with the predetermined correlation between the rotation speed of the hydraulic pump and the torque of the hydraulic pump, which makes is possible to set the torque of the hydraulic pump to an appropriate value and to secure control flexibility of the hydraulic transmission.

Further, while it is required to control each of a plurality of active control valves individually in a case where a hydraulic pump of variable displacement type is used, it is possible to adjust the torque by controlling the bypass valve in the above hydraulic transmission, which makes it possible to simplify control of the hydraulic transmission, and to reduce a control load of the power generating apparatus of renewable-energy type as a whole.

Further, since the above hydraulic transmission includes the hydraulic pump of fixed displacement type, it is unnecessary to provide a component for controlling the displacement of the hydraulic pump, such as an active control valve, which makes it possible to reduce the apparatus cost of the hydraulic transmission, and thus to make the power generating apparatus of renewable-energy type less expensive.

According to the present invention, it is possible to reduce the apparatus cost of the hydraulic transmission and to set the torque of the hydraulic pump to an appropriate value, which makes it possible to secure control flexibility of the hydraulic transmission. Further, it is possible to simplify control of the hydraulic transmission.

### BRIEF DESCRIPTION OF DRAWINGS

FIG. 1 is an overall configuration diagram of a wind turbine power generating apparatus including a hydraulic transmission according to an embodiment.
FIG 2 is a diagram illustrating a specific configuration example of a hydraulic pump.
FIG. 3 is a diagram illustrating a specific configuration example of a hydraulic motor.
FIG. 4 is a chart showing an optimum operation curve (τ-ω curve) and a control curve according to the present embodiment.
FIG. 5 is a flowchart of a method of operating a wind turbine power generating apparatus according to an embodiment.
FIG 6 is a diagram showing examples of change in various parameters of a wind turbine power generating apparatus where the wind speed is constant at a rated wind speed.
FIG. 7 is a diagram showing examples of change in various parameters of a wind turbine power generating apparatus where the wind speed is gradually increasing from a low wind speed that is less than the rated wind speed toward the rated wind speed.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention.

In the following embodiment, a wind turbine power generating apparatus, which is a power generating apparatus of renewable-energy type, will be described as an exemplary application of a hydraulic transmission. However, the present invention can be applied to other power generating apparatuses of renewable-energy type such as a tidal current power generator, an ocean current generator, and a river current generator.

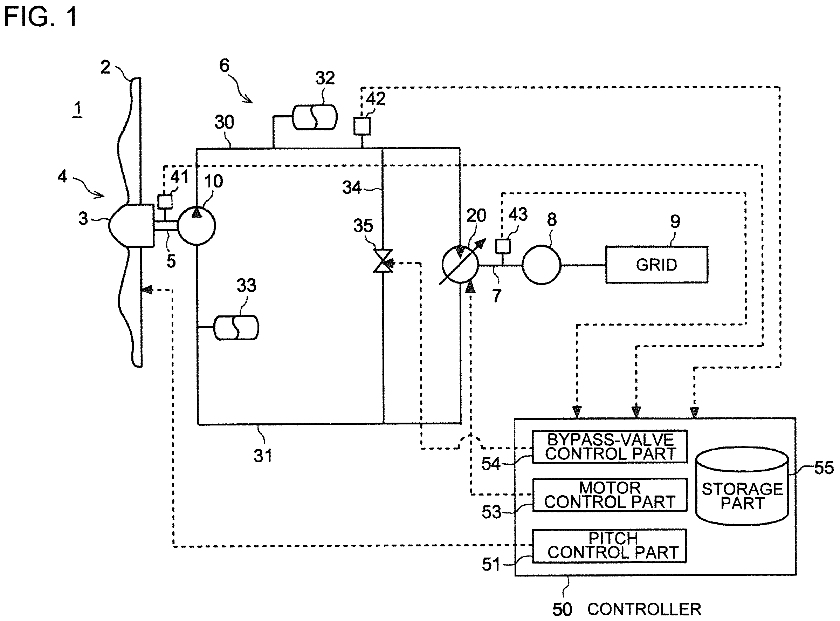

FIG. 1 is an overall configuration diagram of a wind turbine power generating apparatus 1 including a hydraulic transmission 6 according to an embodiment.

For instance, as illustrated in FIG. 1, the wind turbine power generating apparatus 1 according to some embodiments includes a rotor 4 including at least one blade 2 and a hub 3, a rotation shaft 5 which rotates along with the rotor 4, a hydraulic transmission 6 which increases the rotation speed of the rotor 4, and a generator 8 to which rotational energy of the rotor 4 is inputted via the hydraulic transmission 6.

In some embodiments, the rotor 4 is configured such that the at least one blade 2 is mounted to the hub 3, and the at least one blade 2 rotates with the hub 3 by receiving wind. A rotation shaft 5 is connected to the hub 3. The entire rotor 4 rotates by the force of wind received by the at least one blade 2, and the rotation is inputted to the hydraulic transmission 6 via the rotation shaft 5. An actuator (not illustrated) is mounted to the at least one blade 2, and this actuator operates under control of a pitch control part 51 to change the pitch angle of the at least one blade 2.

In an embodiment, the hydraulic transmission 6 includes a hydraulic pump 10 of fixed-displacement type, a hydraulic motor 20, a high-pressure oil line 30, and a low-pressure oil line 31.

The hydraulic pump 10 is configured to be driven by mechanical rotational energy inputted into the rotation shaft 5.

The hydraulic motor 20 is configured to be driven by pressurized oil from the hydraulic pump 10. Further, a generator 8 connected to a utility grid 9 is coupled to an output shaft 7 of the hydraulic motor 20. In the embodiment illustrated in FIG 1 as an example, the hydraulic motor 20 is of variable-displacement type and configured such that the displacement D_{M} is adjustable.

The high-pressure oil line 30 is disposed between an outlet of the hydraulic pump 10 and an inlet of the hydraulic motor 20 and configured to guide pressurized oil (high-pressure oil) produced in the hydraulic pump 10 to the hydraulic motor 20.

The low-pressure oil line 31 is disposed between an outlet of the hydraulic motor 20 and an inlet of the hydraulic pump 10 and configured to guide working oil (low-pressure oil) discharged from the hydraulic motor 20 to the hydraulic pump 10.

In the above hydraulic transmission 6, the high-pressure oil produced by the hydraulic pump 10 flows into the hydraulic motor 20 via the high-pressure oil line 30 and drives the hydraulic motor 20. The low-pressure oil having performed work in the hydraulic motor 20 flows into the hydraulic pump 10 via the low-pressure oil line 31, is pressurized by the hydraulic pump 10, and flows again into the hydraulic motor 20 via the high-pressure oil line 30. A generator 8 connected to the utility grid 9 is coupled to the output shaft 7 of the hydraulic motor 20. Rotation inputted into the hydraulic pump 10 of the hydraulic transmission 6 has its speed increased by the hydraulic transmission 6 and is inputted to the generator 8.

While the hydraulic transmission 6 illustrated in FIG. 1 includes only one hydraulic motor 20, a plurality of hydraulic motors 20 may be provided and each of the hydraulic motors 20 may be connected to the hydraulic pump 10. In a case where a plurality of hydraulic motors 20 is to be provided, each hydraulic motor 20 may be provided with a single generator 8, or a plurality of hydraulic motors 20 sharing an output shaft 7 may be provided with a single generator 8. Further, the generator 8 may be a synchronous generator, or may be disposed coaxially with the hydraulic motor 20.

The specific configuration of the hydraulic pump 10 and the hydraulic motor 20 will now be described.

In some embodiments, the hydraulic pump 10 and the hydraulic motor 20 have the following configuration.

The hydraulic pump 10 is a hydraulic pump of fixed-displacement type in which the displacement is fixed.

In contrast, in the exemplary embodiment illustrated in FIG. 1, the hydraulic motor 20 is a hydraulic motor of variable-displacement type in which the displacement D_{M} is variable within a range of from 0 to D_{Mmax}. In this case, since the displacement D_{M} of the hydraulic motor 20 is variable within a range of from 0 to D_{Mmax}, it is possible to adjust the output of the hydraulic transmission 6 (the output of the hydraulic motor) optionally within a range up to the rated output.

In another option that is not illustrated, the hydraulic motor 20 may be a hydraulic motor of fixed-displacement type, and the generator 8 may be operated under a full converter control.

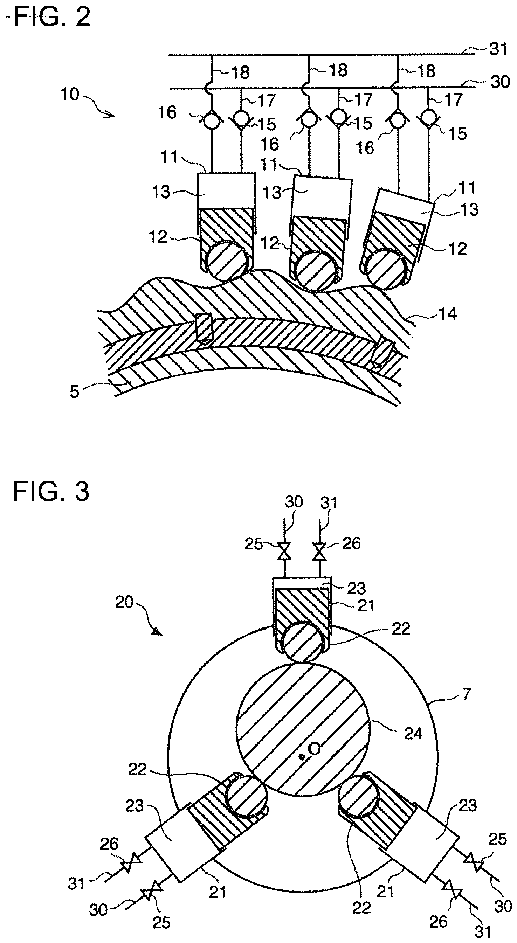

The specific configuration of each of the hydraulic pump 10 and the hydraulic motor 20 according to some embodiments will now be described. FIG 2 is a diagram illustrating a specific configuration of a hydraulic pump, and FIG. 3 is a diagram illustrating a specific configuration of a hydraulic motor.

In some embodiments, the hydraulic pump 10 illustrated in FIG. 2 includes a plurality of pistons 12, a plurality of cylinders 11 which is configured to guide the respective pistons 12 reciprocably and which forms a plurality of working chambers 13 together with the plurality of pistons 12, and a cam 14 having a cam curved surface engaging with the plurality of pistons 12.

Each working chamber 13 is connected to the high-pressure oil line 30 by a high-pressure communication channel 17, and a high-pressure valve 15 is disposed in the high-pressure communication channel 17.

Further, each working chamber 13 is connected to the low-pressure oil line 31 by a low-pressure communication channel 18, and a low-pressure valve 16 is disposed in the low-pressure communication channel 18.

In an embodiment, each high-pressure valve 15 is a check valve configured to permit only a flow of working oil flowing toward the high-pressure oil line 30 from the working chamber 13.

Further, each low-pressure valve 16 is a check valve configured to permit only a flow of working oil flowing toward the working chamber 13 from the low-pressure oil line 31.

In the above hydraulic pump 10, rotation of the cam 14 along with the rotation shaft 5 moves the pistons 12 upward and downward cyclically in accordance with a cam curve, so that each piston 12 repeats a pump stroke of moving from a bottom dead center toward a top dead center and a suction stroke of moving from a top dead center toward a bottom dead center. Thus, the capacity of the working chambers 13 formed by the pistons 12 and the cylinders 11 changes cyclically.

The working chambers 13 of the hydraulic pump 10 are always maintained to be in the active state, because the high-pressure valves 15 and the low-pressure valves 16 each constituted by a check valve are controlled to open and close passively.

In an embodiment, the hydraulic motor 20 illustrated in FIG. 3 includes a plurality of working chambers 23 formed by cylinders 21 and pistons 22, a cam 24 having a cam curved surface which engages with the pistons 22, and a high-pressure valve 25 and a low-pressure valve 26 provided for each of the working chamber 23.

Each high-pressure valve 25 is disposed in a high-pressure communication channel 27 between corresponding one of the working chambers 23 and the high-pressure oil line 30, while each low-pressure valve 26 is disposed in a low-pressure communication channel 28 between corresponding one of the working chambers 23 and the low-pressure oil line 31.

In the hydraulic motor 20, a differential pressure between the high-pressure oil line 30 and the low-pressure oil line 31 created by the hydraulic pump 10 moves the pistons 22 upward and downward cyclically, so that each piston 22 repeats a motoring stroke of moving toward a bottom dead center from a top dead center and a discharge stroke of moving toward a top dead center from a bottom dead center. While the hydraulic motor 20 is operating, the capacity of the working chambers 23 formed by the pistons 22 and the inner wall surfaces of the cylinders 21 changes cyclically.

The hydraulic motor 20 is capable of switching each working chamber 23 to an active state or a non-active state by control to open and close the corresponding high-pressure valve 25 and the corresponding low-pressure valve 26. If the working chamber 23 is in the active state, the high pressure valve 25 is opened and the low-pressure valve 26 is closed during the motoring stroke to cause pressurized oil to flow into the working chamber 23 from the high-pressure oil line 30, and the high-pressure valve 25 is closed and the low-pressure valve 26 is opened during the discharge stroke to send out the pressurized oil having performed work in the working chamber 23 to the low-pressure oil line 31. In contrast, if the working chamber 23 is in the non-active state, during both of the motoring stroke and the pumping stroke, the high-pressure valve 25 is maintained to be closed and the low-pressure valve 26 is maintained to be open, so as to reciprocate the pressurized oil between the working chamber 23 and the low-pressure oil line 31 (i.e., high-pressure oil from the high-pressure oil line 30 is not accepted into the working chamber 23). In this way, the displacement of the hydraulic motor 20 as a whole can be adjusted by changing the ratio of the number of the working chambers 23 in the active state to the total number of the working chambers, similarly to the hydraulic pump 10. The displacement of the hydraulic motor 20 as a whole is adjusted by a motor control part 53 described below.

In another option (not illustrated), the hydraulic motor 20 may be a hydraulic motor of fixed-displacement type, and the generator 8 may be operated under a full converter control. In this case, while the piston 22 moves upward and downward cyclically, the high-pressure valve is open and the low-pressure valve is closed in a motoring stroke in which the piston 22 moves from the top dead center to the bottom dead center, and the low-pressure valve is open and the high-pressure valve is closed in a discharging stroke in which the piston 22 moves from the bottom dead center to the top dead center. Such movement of the piston 22 is in conjunction with the movement of the cam 24. Thus, the hydraulic motor is configured to be of fixed displacement type with the high-pressure valves and the low-pressure valves operating in conjunction with rotation of the cam 24.

The hydraulic pump 10 and the hydraulic motor 20 are not limited to the piston type described above, but may adopt any hydraulic mechanism such as a vane type. Further, as a hydraulic mechanism of piston type, an axial-piston pump/motor, a radial-piston pump/motor, or a reciprocating-piston pump/motor may be used, for instance. Still further, with regard to the cam, the ring cam (cam 14) illustrated in FIG. 2, the eccentric cam (cam 24) illustrated in FIG. 3, or a swash plate cam (not illustrated) may be used.

In some embodiments, as illustrated in FIG. 1 as an example, the hydraulic transmission 6 further includes a bypass line 34 connecting the high-pressure oil line 30 and the low-pressure oil line 31, and a bypass valve 35 disposed in the bypass line 34. The bypass valve 35 is a valve capable of adjusting a pressure of pressurized oil of the high-pressure oil line 30 (hereinafter, referred to as the pressure Pₐ of the high-pressure oil line 30). For instance, the bypass valve 35 may be a pressure relief valve with a variable set pressure, or a pressure adjustment valve with a controllable opening degree. The bypass valve 35 is controlled by the bypass-valve control part 54 described below so that the pressure Pₐ of the high-pressure oil line 30 reaches a target pressure.

Further, an accumulator 32 may be connected to the high-pressure oil line 30 for the purpose of pulsation prevention or of pressure accumulation. For instance, an accumulator 32 for pulsation prevention is capable of absorbing fluctuation of a pressure of pressurized oil in the high-pressure oil line 30. Thus, it is possible to further stabilize the pressure Pₐ of the high-pressure oil line 30 using the accumulator 32. Similarly, an accumulator 33 for pulsation prevention may be connected to the low-pressure oil line 31.

The hydraulic transmission 6 may further include various devices such as an oil filter for removing impure substances in pressurized oil, an oil tank for storing pressurized oil, and an oil cooler for cooling pressurized oil.

The wind turbine power generating apparatus 1 includes various measurement devices. For instance, the various measurement devices include a rotation speed meter 41 for measuring a rotor rotation speed (the rotation speed of the hydraulic pump 10), which is the rotation speed of the rotation shaft 5, a pressure meter 42 for measuring a pressure of pressurized oil of the high-pressure oil line 30, and a rotation speed meter 43 for measuring the rotation speed of the hydraulic motor 20. Furthermore, although not illustrated, the various measurement devices include an anemometer for measuring a wind speed, and an output meter for measuring an output of the generator 8. Measurement values obtained by the above measurement devices are sent to the controller 50 to be used to control the pitch of the blade 2, the pump displacement of the hydraulic pump 10, the motor displacement of the hydraulic motor 20, or the opening degree of the bypass valve 35, for instance.

Now, the configuration of the controller 50 will be described.

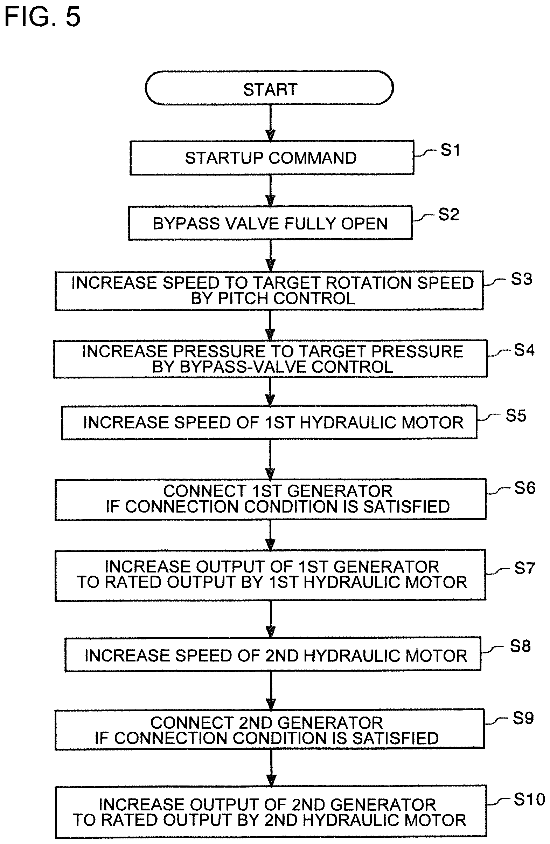

In some embodiments, the controller 50 includes a pitch control part 51, a motor control part 53, a bypass-valve control part 54, and a storage part 55. The storage part 55 may store an optimum operation curve 60 illustrated in FIG. 5, for instance. The optimum operation curve 60 will be described later.

The pitch control part 51 calculates a control command for controlling the pitch angle of the blade 2, and outputs the control command to an actuator for changing the pitch angle of the blade 2.

The motor control part 53 calculates a control command for controlling the displacement of the hydraulic motor 20 and outputs the control command to the hydraulic motor 20. For instance, in the wind turbine power generating apparatus 1 including the hydraulic motor 20 illustrated in FIG. 3, the high-pressure valve 25 and the low-pressure valve 26 are controlled to open and close to control the displacement D_{M} of the hydraulic motor 20 as a whole, thereby controlling the ratio of the working chambers 23 in the active state to the total working chambers, which is the displacement ratio M_{Fd}. Thus, the hydraulic motor 20 calculates a control command including the displacement ratio M_{Fd}, and outputs the control command to the high-pressure valve 25 or the low-pressure valve 26 to control the displacement D_{M} of the hydraulic motor 20 as a whole.

The bypass-valve control part 54 is configured to control the bypass valve 35 to adjust the pressure Pₐ of the pressurized oil in the high-pressure oil line 30.

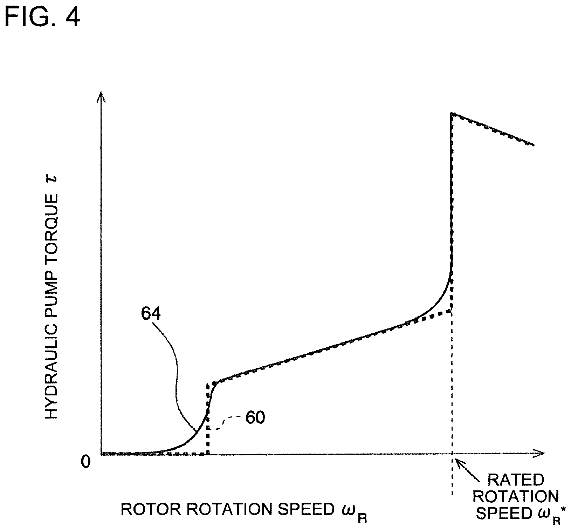

Now, with reference to FIG. 4, the hydraulic transmission control based on the optimum operation curve according to some embodiments will be described. FIG. 4 is a chart showing the optimum operation curve (τ-ω curve) 60 and a control curve 64 according to the present embodiment.

In an embodiment, the optimum operation curve (τ-ω curve) 60 is set to achieve the optimum operation of the wind turbine power generating apparatus 1 in a variable speed range where the rotor rotation speed is at most a rated rotation speed ω_{R}*.

As illustrated in FIG. 4, in an embodiment, a control curve 64 is used in the bypass control for controlling the opening degree of the bypass valve 35, in order to control the rotor rotation speed ω_{R}.

As illustrated in FIG. 4, in the hydraulic transmission according to an embodiment, the bypass-valve control part 54 is configured to control the bypass valve 35 to adjust the pressure Pₐ of the high-pressure oil line 30 in accordance with the optimum operation curve 60, which is a predetermined correlation between the rotor rotation speed ω_{R} and the torque τ of the hydraulic pump 10. Specifically, the bypass-valve control part 54 controls the opening degree of the bypass valve 35 to adjust the flow rate of pressurized oil transferred to the low-pressure oil line 31 from the high-pressure oil line 30 via the bypass line 34, thereby adjusting the pressure Pₐ of the high-pressure oil line 30. By controlling the pressure Pₐ of the high-pressure oil line 30 as described above, the torque τ of the hydraulic pump 10 is adjusted in accordance with the control curve 64 following the optimum operation curve 60.

In an embodiment, the bypass-valve control part 54 of the controller 50 receives a measurement result of the rotation speed of the rotation shaft 5 obtained by the rotation speed meter 41, and applies the measurement result to the optimum operation curve 60 to calculate a target torque of the hydraulic pump 10. Then, the bypass-valve control part 54 calculates a pressure target value of the high-pressure oil line 30 for achieving the target torque, and calculates an opening-degree command for the bypass valve 35 on the basis of a difference between the pressure target value and the measurement result of the pressure Pₐ of the high-pressure oil line 30 obtained by the pressure meter 42. The bypass valve 35 operates in accordance with the opening-degree command from the bypass-valve control part 54, and brings the pressure Pₐ of the high-pressure oil line 30 closer to the pressure target value. In this way, it is possible to control the torque of the hydraulic pump 10 in accordance with the control curve 64 following the optimum operation curve 60.

According to the above hydraulic transmission 6, since the hydraulic pump 10 of fixed displacement type is used, it is unnecessary to provide a component for controlling the displacement of the hydraulic pump 10, such as an active control valve, which makes it possible to reduce the apparatus cost of the hydraulic transmission 6.

Further, the bypass valve 35 is disposed in the bypass line 34 connecting the high-pressure oil line 30 and the low-pressure oil line 31 so that the pressure Pₐ of the high-pressure oil line 30 is adjustable through control of the bypass valve by the bypass-valve control part 54. Thus, it is possible to control the torque of the hydraulic pump 10 using the pressure Pₐ of the high-pressure oil line 30. At this time, the pressure of the pressurized oil of the high-pressure oil line 30 is controlled in accordance with a predetermined correlation between the rotation speed of the hydraulic pump 10 and the torque of the hydraulic pump 10 to adjust the torque of the hydraulic pump 10 to the target value corresponding to the rotation speed of the hydraulic pump 10. In this way, it is possible to set the torque of the hydraulic pump 10 to an appropriate value, which makes it possible to secure control flexibility of the hydraulic transmission 6.

Further, while it is required to control each of a plurality of active control valves individually in a case where a hydraulic pump of variable displacement type is used, it is possible to adjust the torque by controlling the bypass valve 35 in the above hydraulic transmission 6, which makes it possible to simplify control of the hydraulic transmission 6.

Further, as described above, in the bypass-valve control part 54, it is possible to adjust the torque to an appropriate value by adjusting the torque of the hydraulic pump 10 on the basis of the optimum operation curve (see reference numeral 60 in FIG. 4, for instance). For instance, in a case where the hydraulic transmission 6 is incorporated into the power generating apparatus of renewable-energy type (wind turbine power generating apparatus 1) as illustrated in FIG.1, it is possible to achieve the optimum operation of the power generating apparatus of renewable-energy type (wind turbine power generating apparatus 1).

Further, as described above, using a check valve as the high-pressure valve 15 and the low-pressure valve 16 provided for each of the plurality of working chambers 13 of the hydraulic pump 10, it is possible to switch inflow and outflow of working oil with respect to each working chamber 13 in accordance with the pressure Pₐ of the high-pressure oil line 30 adjusted by the bypass-valve control part 54 without controlling each valve individually. For instance, a check valve has a weight smaller than that of an active control valve used in a hydraulic pump of variable-displacement type, and thus it is possible to reduce the weight of the hydraulic transmission 6 by implementing the above embodiment.

In an embodiment, the bypass-valve control part 54 is configured to control the bypass valve 35 to be fully open at least when the hydraulic pump 10 in a stopped state starts to rotate during a startup of the hydraulic transmission 6.

With the above configuration, during a startup of the hydraulic transmission 6, the bypass valve 35 is controlled to be fully open at least when the hydraulic pump 10 in a stopped state starts to rotate, which makes it possible to bring the load torque of the hydraulic transmission 6 closer to zero and facilitate startup of the hydraulic pump 10.

In an embodiment, the bypass-valve control part 54 is configured to control the bypass valve 35 so as to achieve the pressure Pₐ of the high-pressure oil line 30 such that an initial torque required to start the hydraulic motor 20 in a stopped state to rotate can be achieved after the hydraulic pump 10 starts to rotate, during a startup of the hydraulic transmission 6.

With the above configuration, even in a case where a predetermined initial torque is required to start the hydraulic motor 20, the required initial torque is secured by adjusting the pressure Pₐ of the high-pressure oil line 30 through control of the bypass valve 35. In this way, it is possible to start the hydraulic motor 20 smoothly.

Next, a method of operating the wind turbine power generating apparatus 1 according to some embodiments will be described.

In some embodiments, the method includes a torque adjustment step of controlling the pressure Pₐ of the high-pressure oil line 30 by controlling the bypass valve 35 to adjust the torque of the hydraulic pump 10 to the target value corresponding to the rotation speed of the hydraulic pump 10, in accordance with a predetermined correlation (e.g. the optimum operation curve 60 in FIG. 4) between the rotation speed of the hydraulic pump 10 and the torque of the hydraulic pump 10.

According to the above method of operating the wind turbine power generating apparatus 1, in the torque adjustment step, the pressure Pₐ of the high-pressure oil line 30 is controlled by controlling the bypass valve 35 in accordance with the predetermined correlation between the rotation speed of the hydraulic pump 10 and the torque of the hydraulic pump 10, which makes is possible to set the torque of the hydraulic pump 10 to an appropriate value and to secure control flexibility of the hydraulic transmission 6.

Further, while it is required to control each of a plurality of active control valves individually in a case where a hydraulic pump of variable displacement type is used, it is possible to adjust the torque by controlling the bypass valve 35 in the above hydraulic transmission 6, which makes it possible to simplify control of the hydraulic transmission 6, and to reduce a control load of the wind turbine power generating apparatus as a whole.

Further, since the above hydraulic transmission 6 includes the hydraulic pump 10 of fixed displacement type, it is unnecessary to provide a component for controlling the displacement of the hydraulic pump 10, such as an active control valve, which makes it possible to reduce the apparatus cost of the hydraulic transmission 6, and thus to make the wind turbine power generating apparatus 1 less expensive.

In the torque adjustment step, if the rotation speed of the rotation shaft 5 is not higher than a rated rotation speed, the pressure Pₐ of the high-pressure oil line 30 may be controlled to adjust the torque of the hydraulic pump 10 to the target value on the basis of the optimum operation curve (see the reference numeral 60 in FIG. 4, for instance) defining the relationship between the rotation speed of the rotation shaft 5 and the torque of the hydraulic pump 10.

According to the above method, the torque of the hydraulic pump 10 is adjusted on the basis of the optimum operation curve, which makes it possible to adjust the torque to an appropriate value. In a case where the hydraulic transmission 6 is incorporated into a power generating apparatus of renewable-energy type (wind turbine power generating apparatus 1) as illustrated in FIG.1, it is possible to achieve the optimum operation of the power generating apparatus of renewable energy type (wind turbine power generating apparatus 1).

Further, the method further includes a rotation start step of starting rotation of the hydraulic pump 10 in a state where the bypass valve 35 is controlled to be fully open during a startup of the hydraulic transmission 6.

As described above, at least when rotation of the hydraulic pump 10 in a stopped state is to be started during a startup of the hydraulic transmission 6, the bypass valve 35 is controlled to be fully open, which makes it possible to bring a load torque of the hydraulic transmission 6 closer to zero and facilitate startup of the hydraulic pump 10.

Further, the method may further include a pressure increase step of controlling the bypass valve 35 so as to achieve the pressure Pₐ of the high-pressure oil line 30 such that an initial torque required to start rotation of the hydraulic motor 20 in a stopped state can be achieved after the hydraulic pump 10 starts to rotate, during a startup of the hydraulic transmission 6.

Accordingly, the required initial torque is secured by adjusting the pressure Pₐ of the high-pressure oil line 30 through control of the bypass valve 35 even in a case where a predetermined initial torque is required to start the hydraulic motor 20. In this way, it is possible to start the hydraulic motor 20 smoothly.

FIG. 5 is a flowchart of a method of operating the wind turbine power generating apparatus 1 according to an embodiment. In the following description, as an example, the wind turbine power generating apparatus 1 includes one hydraulic pump, two hydraulic motors (the first hydraulic motor and the second hydraulic motor), and two generators (the first generator and the second generator) connected to the respective hydraulic motors.

In the embodiment illustrated in FIG. 5, if a start command is inputted to the controller 50 of the wind turbine power generating apparatus 1 (S1), the bypass-valve control part 54 controls the bypass valve 35 disposed in the bypass line 34 to be fully open (S2) so as to achieve the initial torque required to start rotation of the hydraulic motor 20 in a stopped state. Next, the pitch control part 51 increases the rotor rotation speed ω_{R} to the target rotation speed (S3). Subsequently, the bypass-valve control part 54 controls the opening degree of the bypass valve 35, and increases the pressure Pₐ of the high-pressure oil line 30 to the target pressure (S4). Then, the speed of the first hydraulic motor is increased (S5).

Further, if the first generator connected to the first hydraulic motor satisfies the connecting condition, the first generator is connected to a utility grid (S6). At this time, the first generator may be synchronized with the utility grid using a synchronizer, or may be connected to the utility grid via a full converter. Once the first generator is connected, the displacement D_{M} of the first hydraulic motor is increased to the maximum value D_{Mmax1}, and the output of the first generator is increased to the rated output (S7). The displacement is fixed if the hydraulic motor is of fixed displacement type.

Next, the speed of the second hydraulic motor is increased (S8).

Then, if the second generator connected to the second hydraulic motor satisfies the connecting condition, the second generator is connected to the utility grid (S9). At this time, the second generator may be synchronized with the utility grid using a synchronizer, or may be connected to the utility grid via a full converter. Once the second generator is connected, the displacement D_{M2} of the second hydraulic motor is increased to the maximum value D_{Mmax2}, and the output of the second generator is increased to the rated output (S10). The displacement is fixed if the hydraulic motor is of fixed displacement type.

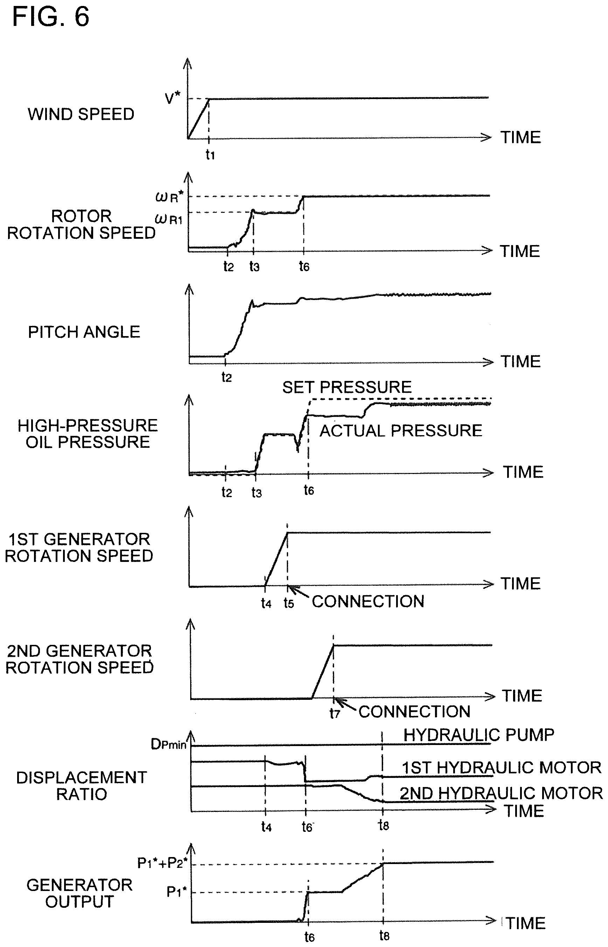

FIG. 6 is a diagram showing examples of change in various parameters of the wind turbine power generating apparatus 1 where the wind speed is constant at the rated wind speed. The same reference numerals in FIG. 1 are used where suitable in the following description.

In the embodiment illustrated in FIG. 6 as an example, the wind turbine power generating apparatus 1 becomes ready to be started at time t₁, when the wind speed is the rated wind speed V*. Thus, the pitch control part 51 increases the pitch angle gradually from time t₂ immediately after time t₁ through pitch control. From time t₂, the rotor rotation speed ω_{R} also increases gradually with the pitch angle. At this time, if the pressure Pₐ of the high-pressure oil line 30 is high, the pressure Pₐ may affect an increase in the rotation speed of the rotor 4. Thus, the wind turbine power generating apparatus 1 is started while the bypass valve 35 is controlled to be fully open by the bypass-valve control part 54. In a case where a relief valve with an adjustable set pressure is used as the bypass valve 35, the set pressure is set to approximately zero at time t₂. At time t₃, when the rotor rotation speed reaches the initial rotation speed ω_{R1}, the set pressure of the relief valve 35 is gradually increased. When the set pressure of the relief valve 35 increases, the pressure Pₐ of the high-pressure oil line 30 increases in accordance with an increase in the set pressure of the relief valve 35 because the discharge amount of the hydraulic pump 10 is excessive with respect to the intake amount (=0) of the hydraulic motor 20. As described above, the pressure Pₐ of the high-pressure oil line 30 is increased to a pressure such that the initial torque required to start the hydraulic motor 20 can be achieved.

At time t₄, the displacement of the first hydraulic motor is increased to more than zero, so as to increase the rotation speed of the first hydraulic motor and of the first generator coupled to the first hydraulic motor. Then, after the rotation speed of the first generator reaches the synchronous speed (= a generator rotation speed corresponding to the grid frequency) and the phase of the first generator is synchronized with the phase of the grid, the first generator is connected to the grid at time t₅.

Then, the displacement D_{M} of the first hydraulic motor is increased gradually toward D_{Mmax} and the set pressure of the relief valve 35 is increased gradually toward the maximum value. Further, at the same time, the pitch angle is increased through the pitch control to increase the rotor rotation speed toward the rated rotation speed ω_{R}*. Then, at time t₆, the rotor rotation speed reaches the rated rotation speed ω_{R}*, the displacement of the hydraulic motor 20 reaches D_{Mmax}, and the generator output reaches the rated output P₁* of the first generator. Next, the displacement of the second hydraulic motor is increased to more than zero, so as to increase the rotation speed of the second hydraulic motor and of the second generator coupled to the second hydraulic motor. Then, after the rotation speed of the second generator reaches the synchronous speed (= a generator rotation speed corresponding to the grid frequency) and the phase of the second generator is synchronized with the phase of the grid, the second generator is connected to the grid at time t₇. Next, the displacement of the hydraulic pump is increased gradually toward the maximum value while the displacement of the second hydraulic motor is increased toward the maximum value. Finally, at time tg, the displacement of the second hydraulic motor 20 and the displacement of the hydraulic pump 10 reach the maximum value, and at this time, the generator output reaches the sum (= P₁* + P₂*) of the rated output P₁* of the first generator and the rated output P₂* of the second generator.

The displacement is fixed if the hydraulic motor is of fixed displacement type, and the hydraulic motor should be connected to the utility grid via a full converter.

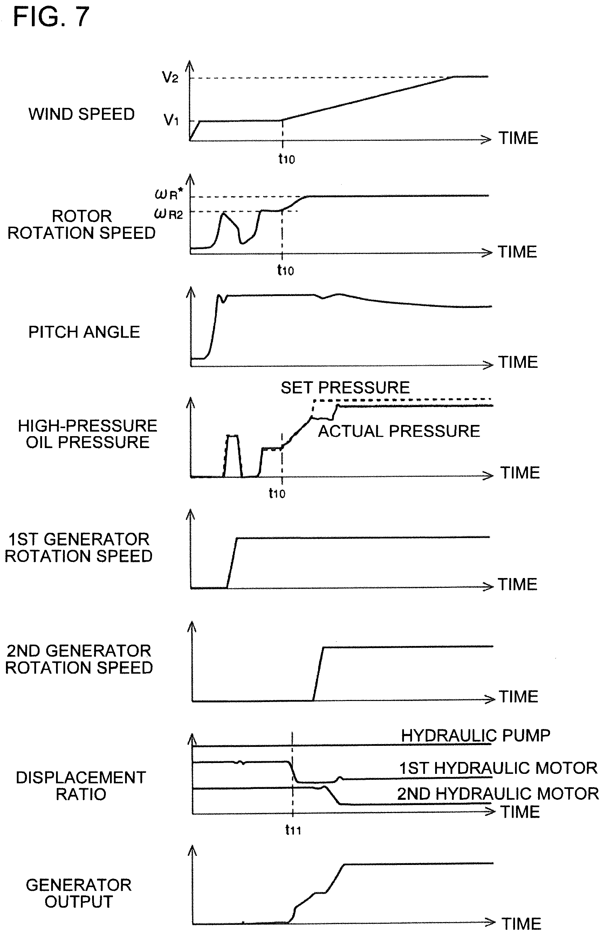

FIG. 7 is a diagram showing examples of change in various parameters of the wind turbine power generating apparatus 1 where the wind speed is gradually increasing from a low wind speed that is less than the rated wind speed toward the rated wind speed. The example illustrated in the drawing is basically similar to that in FIG. 6, and thus only the different points will be described below.

In the example in FIG. 7, after connection of the first generator, the wind speed increases from V₁ to V₂ at time t₁₀. In accordance, the rotor rotation speed increases toward the rated rotation speed ω_{R}* from ω_{R2}. At this time, the set pressure of the relief valve is adjusted to achieve the predetermined correlation (a section of the τ-ω curve below a threshold torque) between the rotor rotation speed and the torque of the hydraulic pump.

As described above, according to the example illustrated in FIG. 7, it is possible to achieve the optimum partial load operation of the wind turbine power generating apparatus 1 taking the advantage of adjustment of the set pressure of the bypass valve 35 (e.g. relief valve).

As described above, according to some embodiments, it is possible to reduce the apparatus cost of the hydraulic transmission 6 and to set the torque of the hydraulic pump 10 to an appropriate value, which makes it possible to secure control flexibility of the hydraulic transmission 6. Further, it is possible to simplify control of the hydraulic transmission 6.

Embodiments of the present invention were described in detail above, but the present invention is not limited thereto, and various amendments and modifications may be implemented.

For instance, while the hydraulic transmission 6 in the above described embodiments include the hydraulic motor 20 of variable-displacement type, a hydraulic motor of fixed displacement type may be used as the hydraulic motor 20, as already described above. Further, also in a case where a hydraulic motor of variable-displacement type is used as the hydraulic motor 20, the above described various embodiments are merely embodiments and not intended to limit the present invention to the configurations described in the above embodiments.

Further, while the hydraulic transmission 6 in the above described embodiments is applied to a power generating apparatus of renewable-energy type (e.g. wind turbine power generating apparatus 1), application of the hydraulic transmission 6 is not limited to this, and may be other apparatuses such as machines for controlling tidal current generation or controlling a ship propeller, a civil engineering machine, and a constructing machine. A power generating apparatus of renewable-energy type is a power generating apparatus utilizing renewable energy such as wind, tidal current, ocean current, and river current. For instance, it may be a wind turbine power generating apparatus, a tidal current power generating apparatus, an ocean current power generating apparatus, or a river current power generating apparatus.

## Claims

1. A hydraulic transmission (6) comprising:
a hydraulic pump (10) of fixed-displacement type configured to be driven by mechanical energy inputted into a rotation shaft (5);
a hydraulic motor (20) configured to be driven by pressurized oil from the hydraulic pump (10);
a high-pressure oil line (30) disposed between an outlet of the hydraulic pump (10) and an inlet of the hydraulic motor (20), for guiding the pressurized oil from the hydraulic pump (10) to the hydraulic motor (20);
a low-pressure oil line (31) disposed between an outlet of the hydraulic motor (20) and an inlet of the hydraulic pump (10), for guiding working oil from the hydraulic motor (20) to the hydraulic pump (10), the working oil having a pressure lower than a pressure of the pressurized oil;
a bypass line (34) connecting the high-pressure oil line (30) and the low-pressure oil line (31);
a bypass valve (35) disposed in the bypass line (34); and
a bypass-valve control part (54) configured to control the bypass valve (35) to adjust the pressure of the pressurized oil in the high-pressure oil line (30),
wherein the hydraulic pump (10) comprises a plurality of pistons (12), a plurality of cylinders (11) configured to guide the respective pistons (12) reciprocably and forming a plurality of working chambers (13) with the plurality of pistons (12), and high pressure valves (15) and low pressure valves (16) provided for the plurality of working chambers (13),
a check valve is used as the high-pressure valve (15) and the low-pressure valve (16) provided for each of the plurality of working chambers of the hydraulic pump,
wherein the high pressure valves (15) of the plurality of working chambers (13) are check valves configured to permit only a flow of the working oil flowing from the working chambers (13) to the high-pressure oil line (30),
wherein the low pressure valves (16) of the plurality of working chambers (13) are check valves configured to permit only a flow of the working oil flowing from the low-pressure oil line (31) to the working chambers (13), and
wherein the bypass-valve control part (54) is configured to, if a rotation speed (ωR) of the rotation shaft (5) is not higher than a rated rotation speed, control the pressure of the pressurized oil in the high-pressure oil line (30) to adjust a torque (τ) of the hydraulic pump (10) to a target value on the basis of an optimum operation curve (60) which defines a relationship between the rotation speed (ωR) of the rotation shaft (5) and the torque (τ) of the hydraulic pump (10) .

2. The hydraulic transmission (6) according to claim 1,
wherein the bypass-valve control part (54) is configured to:
calculate the target value of the torque of the hydraulic pump (10) by applying a measurement result of the rotation speed (ωR) of the rotation shaft (5) to the optimum operation curve (60) which defines the relationship between the rotation speed (ωR) of the rotation shaft (5) and the torque (τ) of the hydraulic pump (10),
calculate a pressure target value of the high-pressure oil line (30) for achieving the target value of the torque, and
calculate an opening-degree command for the bypass valve (35) on the basis of a difference between the pressure target value and a measurement result of a pressure (Pa) of the high-pressure oil line (30).

3. The hydraulic transmission (6) according to claim 1 or 2,
wherein the bypass-valve control part (54) is configured to control the bypass valve (35) to be fully open, at least when the hydraulic pump (10) in a stopped state is started to rotate during a startup of the hydraulic transmission (6).

4. The hydraulic transmission (6) according to any one of claims 1 to 3,
wherein the bypass-valve control part (54) is configured to control the bypass valve (35) so as to achieve a pressure of the pressurized oil in the high-pressure oil line (30), the pressure being such that an initial torque required to start rotation of the hydraulic motor (20) in a stopped state is obtainable, after rotation of the hydraulic pump (10) is started, during a startup of the hydraulic transmission (6).

5. A power generating apparatus of renewable-energy type (1), comprising:
at least one blade (2);
a rotation shaft (5) configured to be rotated by renewable energy received by the at least one blade (2);
a generator (8) configured to generate electric power using rotational energy of the rotation shaft (5); and
the hydraulic transmission (6) according to any one of claims 1 to 4 configured to transmit the rotational energy of the rotation shaft (5) to the generator (8).

6. The power generating apparatus of renewable-energy type (1) according to claim 5, wherein the power generating apparatus of renewable-energy type (1) is a wind turbine power generating apparatus configured to generate electric power at the generator (8) by utilizing wind energy received from wind by the at least one blade (2), the wind being a renewable energy source.

7. A method of operating a hydraulic transmission (6) comprising:
a hydraulic pump (10) of fixed-displacement type configured to be driven by mechanical energy inputted into a rotation shaft (5);
a hydraulic motor (20) of variable-displacement type configured to be driven by pressurized oil from the hydraulic pump (10);
a high-pressure oil line (30) disposed between an outlet of the hydraulic pump (10) and an inlet of the hydraulic motor (20);
a low-pressure oil line (31) disposed between an outlet of the hydraulic motor (20) and an inlet of the hydraulic pump (10);
a bypass line (34) connecting the high-pressure oil line (30) and the low-pressure oil line (31); and
a bypass valve (35) disposed in the bypass line (34),
wherein the hydraulic pump (10) comprises a plurality of pistons (12), a plurality of cylinders (11) configured to guide the respective pistons (12) reciprocably and forming a plurality of working chambers (13) with the plurality of pistons (12), and high pressure valves (15) and low pressure valves (16) provided for the plurality of working chambers (13),
a check valve is used as the high-pressure valve (15) and the low-pressure valve (16) provided for each of the plurality of working chambers of the hydraulic pump,
wherein the high pressure valves (15) of the plurality of working chambers (13) are check valves configured to permit only a flow of the working oil flowing from the working chambers (13) to the high-pressure oil line (30), and
wherein the low pressure valves (16) of the plurality of working chambers (13) are check valves configured to permit only a flow of the working oil flowing from the low-pressure oil line (31) to the working chambers (13),
the method comprising:
a torque adjustment step of controlling a pressure of the pressurized oil in the high-pressure oil line (30) by controlling the bypass valve (35) to adjust a torque (τ) of the hydraulic pump (10) to a target value on the basis of an optimum operation curve (60) which defines a relationship between a rotation speed (ωR) of the rotation shaft (5) and the torque (τ) of the hydraulic pump (10), if the rotation speed (ωR) of the rotation shaft (5) is not higher than a rated rotation speed.

8. The method of operating a hydraulic transmission (6) according to claim 7,
wherein the torque adjustment step comprises:
calculating the target value of the torque of the hydraulic pump (10) by applying a measurement result of the rotation speed (ωR) of the rotation shaft (5) to the optimum operation curve (60) which defines the relationship between the rotation speed (ωR) of the rotation shaft (5) and the torque (τ) of the hydraulic pump (10),
calculating a pressure target value of the high-pressure oil line (30) for achieving the target value of the torque, and
calculating an opening-degree command for the bypass valve (35) on the basis of a difference between the pressure target value and a measurement result of a pressure (Pa) of the high-pressure oil line (30).

9. The method of operating a hydraulic transmission (6) according to claim 7 or 8, further comprising
a rotation start step of starting rotation of the hydraulic pump (10) while the bypass valve (35) is controlled to be fully open, during a startup of the hydraulic transmission (6).

10. The method of operating a hydraulic transmission (6) according to any one of claims 7 to 9, further comprising
a pressure-increase step of controlling the bypass valve (35) so as to achieve a pressure of the pressurized oil in the high-pressure oil line (30), the pressure being such that an initial torque required to start rotation of the hydraulic motor (20) in a stopped state is obtainable, after rotation of the hydraulic pump (10) is started, during a startup of the hydraulic transmission (6).

11. A method of operating the power generating apparatus of renewable-energy type (1) according to claim 5 or 6, comprising
a torque adjustment step of controlling a pressure of the pressurized oil in the high-pressure oil line (30) to adjust a torque (τ) of the hydraulic pump (10) to a target value on the basis of an optimum operation curve (60) which defines a relationship between a rotation speed (ωR) of the rotation shaft (5) and the torque (τ) of the hydraulic pump (10), if the rotation speed (ωR) of the rotation shaft (5) is not higher than a rated rotation speed.

## Patentansprüche

1. Ein hydraulisches Getriebe (6) mit:
einer hydraulischen Pumpe (10) des Typs mit fester Verdrängung, die konfiguriert ist, um durch in eine Rotationswelle (5) eingebrachte mechanische Energie angetrieben zu werden,
einem hydraulischen Motor (20), der konfiguriert ist, um durch Drucköl von der hydraulischen Pumpe (10) angetrieben zu werden,
einer Hochdruck-Ölleitung (30), die zwischen einem Auslass der hydraulischen Pumpe (10) und einem Einlass des hydraulischen Motors (20) angeordnet ist, um das Drucköl von der hydraulischen Pumpe (10) zu dem hydraulischen Motor (20) zu leiten,
einer Niederdruck-Ölleitung (31), die zwischen einem Auslass des hydraulischen Motors (20) und einem Einlass der hydraulischen Pumpe (10) angeordnet ist, um Arbeitsöl von dem hydraulischen Motor (20) zu der hydraulischen Pumpe (10) zu leiten, wobei das Arbeitsöl einen niedrigeren Druck besitzt als ein Druck des Drucköls,
einer Bypassleitung (34), die die Hochdruck-Ölleitung (30) und die Niederdruck-Ölleitung (31) verbindet,
einem Bypassventil (35), das in der Bypassleitung (34) angeordnet ist, und
einem Bypassventil-Steuerteil (54), das konfiguriert ist, um das Bypassventil (35) zu steuern, um den Druck des Drucköls in der Hochdruck-Ölleitung (30) einzustellen,
wobei die hydraulische Pumpe (10) eine Mehrzahl von Kolben (12), eine Mehrzahl von Zylindern (11), die zum Führen der jeweiligen Kolben (12) für eine Hin- und Herbewegung ausgestaltet sind, und eine Mehrzahl von Arbeitskammern (13) mit der Mehrzahl von Kolben (12) bilden, und Hochdruckventile (15) und Niederdruckventile (16), die für die Mehrzahl von Arbeitskammern (13) vorgesehen sind, aufweist,
wobei ein Rückschlagventil als das Hochdruckventil (15) und das Niederdruckventil (16), die für jede der Mehrzahl von Arbeitskammern der hydraulischen Pumpe vorgesehen sind, verwendet ist,
wobei die Hochdruckventile (15) der Mehrzahl von Arbeitskammern (13) Rückschlagventile sind, die konfiguriert sind, um nur eine Strömung des Arbeitsöls von den Arbeitskammern (13) zu der Hochdruck-Ölleitung (30) zuzulassen,
wobei die Niederdruckventile (16) der Mehrzahl von Arbeitskammern (13) Rückschlagventile sind, die konfiguriert sind, um nur eine Strömung des Arbeitsöls von der Niederdruck-Ölleitung (31) zu den Arbeitskammern (13) zuzulassen, und
wobei das Bypassventil-Steuerteil (54) konfiguriert ist, um, wenn eine Rotationsgeschwindigkeit (ωR) der Rotationswelle (5) nicht höher ist als eine Nenn-Rotationsgeschwindigkeit, den Druck des Drucköls in der Hochdruck-Ölleitung (30) zu steuern, um ein Drehmoment (τ) der hydraulischen Pumpe (10) auf einen Zielwert auf der Basis einer optimalen Betriebskurve (60) einzustellen, welche eine Beziehung zwischen der Rotationsgeschwindigkeit (ωR) der Rotationswelle (5) und dem Drehmoment (τ) der hydraulischen Pumpe (10) definiert.

2. Das hydraulische Getriebe (6) gemäß Anspruch 1,
wobei das Bypassventil-Steuerteil (54) konfiguriert ist, um:
den Zielwert des Drehmoments der hydraulischen Pumpe (10) durch Anwenden eines Messergebnisses der Rotationsgeschwindigkeit (ωR) der Rotationswelle (5) auf die optimale Betriebskurve (60) zu berechnen, welche die Beziehung zwischen der Rotationsgeschwindigkeit (ωR) der Rotationswelle (5) und dem Drehmoment (τ) der hydraulischen Pumpe (10) definiert,
einen Druckzielwert der Hochdruck-Ölleitung (30) zur Erreichung des Zielwerts des Drehmoments zu berechnen, und
einen Öffnungsgradbefehl für das Bypassventil (35) auf der Basis einer Differenz zwischen dem Druckzielwert und einem Messergebnis eines Drucks (Pa) der Hochdruck-Ölleitung (30) zu berechnen.

3. Das hydraulische Getriebe (6) gemäß Anspruch 1 oder 2,
wobei das Bypassventil-Steuerteil (54) konfiguriert ist, um das Bypassventil (35) so zu steuern, dass es vollständig geöffnet ist, zumindest wenn die hydraulische Pumpe (10) aus einem gestoppten Zustand gestartet wird, um während eines Anlaufs des hydraulischen Getriebes (6) zu rotieren.

4. Das hydraulische Getriebe (6) gemäß einem der Ansprüche 1 bis 3,
wobei das Bypassventil-Steuerteil (54) konfiguriert ist, um das Bypassventil (35) so zu steuern, dass es einen Druck des Drucköls in der Hochdruck-Ölleitung (30) bewirkt, wobei der Druck so ist, dass ein zum Starten der Rotation des hydraulischen Motors (20) in einem gestoppten Zustand erforderliches Anlaufmoment erhältlich ist, nachdem die Rotation der hydraulischen Pumpe (10) gestartet ist, während eines Anlaufs des hydraulischen Getriebes (6).

5. Eine Vorrichtung zur Stromerzeugung aus erneuerbarer Energie (1), mit:
zumindest einer Schaufel (2),
einer Rotationswelle (5), die konfiguriert ist, um durch erneuerbare Energie, die durch die zumindest eine Schaufel (2) empfangen wird, gedreht zu werden,
einem Generator (8), der konfiguriert ist, um elektrischen Strom unter Verwendung von Rotationsenergie der Rotationswelle (5) zu erzeugen, und
dem hydraulischen Getriebe (6) gemäß einem der Ansprüche 1 bis 4, das konfiguriert ist, um die Rotationsenergie der Rotationswelle (5) zu dem Generator (8) zu übertragen.

6. Die Vorrichtung zur Stromerzeugung aus erneuerbarer Energie (1) gemäß Anspruch 5, wobei die Vorrichtung zur Stromerzeugung aus erneuerbarer Energie (1) eine Windturbinen-Stromerzeugungsvorrichtung ist, die konfiguriert ist, um elektrischen Strom an dem Generator (8) durch Nutzung von Windenergie zu erzeugen, die von Wind durch die mindestens eine Schaufel (2) empfangen wird, wobei der Wind eine erneuerbare Energiequelle ist.

7. Ein Verfahren zum Betrieb eines hydraulischen Getriebes (6), das aufweist:
eine hydraulische Pumpe (10) des Typs mit fester Verdrängung, die konfiguriert ist, um durch in eine Rotationswelle (5) eingebrachte mechanische Energie angetrieben zu werden,
einen hydraulischen Motor (20) vom Typ mit variabler Verdrängung, der konfiguriert ist, um durch Drucköl von der hydraulischen Pumpe (10) angetrieben zu werden,
eine Hochdruck-Ölleitung (30), die zwischen einem Auslass der hydraulischen Pumpe (10) und einem Einlass des hydraulischen Motors (20) angeordnet ist,
eine Niederdruck-Ölleitung (31), die zwischen einem Auslass des hydraulischen Motors (20) und einem Einlass der hydraulischen Pumpe (10) angeordnet ist,
eine Bypassleitung (34), die die Hochdruck-Ölleitung (30) und die Niederdruck-Ölleitung (31) verbindet, und
ein Bypassventil (35), das in der Bypassleitung (34) angeordnet ist,
wobei die hydraulische Pumpe (10) eine Mehrzahl von Kolben (12), eine Mehrzahl von Zylindern (11), die zum Führen der jeweiligen Kolben (12) für eine Hin- und Herbewegung ausgestaltet sind, und eine Mehrzahl von Arbeitskammern (13) mit der Mehrzahl von Kolben (12) bilden, und Hochdruckventile (15) und Niederdruckventile (16), die für die Mehrzahl von Arbeitskammern (13) vorgesehen sind, aufweist,
wobei ein Rückschlagventil als das Hochdruckventil (15) und das Niederdruckventil (16), die für jede der Mehrzahl von Arbeitskammern der hydraulischen Pumpe vorgesehen sind, verwendet ist,
wobei die Hochdruckventile (15) der Mehrzahl von Arbeitskammern (13) Rückschlagventile sind, die konfiguriert sind, um nur eine Strömung des Arbeitsöls von den Arbeitskammern (13) zu der Hochdruck-Ölleitung (30) zuzulassen, und
wobei die Niederdruckventile (16) der Mehrzahl von Arbeitskammern (13) Rückschlagventile sind, die konfiguriert sind, um nur eine Strömung des Arbeitsöls von der Niederdruck-Ölleitung (31) zu den Arbeitskammern (13) zuzulassen,
wobei das Verfahren aufweist:
einen Drehmomenteinstellschritt des Steuerns eines Drucks des Drucköls in der Hochdruck-Ölleitung (30) durch Steuern des Bypassventils (35), um ein Drehmoment (τ) der hydraulischen Pumpe (10) auf eine Zielwert auf der Basis einer optimalen Betriebskurve (60) einzustellen, welche eine Beziehung zwischen einer Rotationsgeschwindigkeit (ωR) der Rotationswelle (5) und dem Drehmoment (τ) der hydraulischen Pumpe (10) definiert, wenn die Rotationsgeschwindigkeit (ωR) der Rotationswelle (5) nicht höher ist als eine Nenn-Rotationsgeschwindigkeit.

8. Das Verfahren zum Betrieb eines hydraulischen Getriebes (6) gemäß Anspruch 7,
wobei der Drehmomenteinstellschritt aufweist:
Berechnen des Zielwerts des Drehmoments der hydraulischen Pumpe (10) durch Anwenden eines Messergebnisses der Rotationsgeschwindigkeit (ωR) der Rotationswelle (5) auf die optimale Betriebskurve (60), welche die Beziehung zwischen der Rotationsgeschwindigkeit (ωR) der Rotationswelle (5) und dem Drehmoment (τ) der hydraulischen Pumpe (10) definiert,
Berechnen eines Druckzielwerts der Hochdruck-Ölleitung (30) zur Erreichung des Zielwerts des Drehmoments, und
Berechnen eines Öffnungsgradbefehls für das Bypassventil (35) auf der Basis einer Differenz zwischen dem Druckzielwert und einem Messergebnis eines Drucks (Pa) der Hochdruck-Ölleitung (30).

9. Das Verfahren zum Betrieb eines hydraulischen Getriebes (6) gemäß Anspruch 7 oder 8, ferner mit
einem Rotationsstartschritt des Startens der Rotation der hydraulischen Pumpe (10), während das Bypassventil (35) so gesteuert wird, dass es vollständig geöffnet ist, während eines Anlaufs des hydraulischen Getriebes (6).

10. Das Verfahren zum Betrieb eines hydraulischen Getriebes (6) gemäß einem der Ansprüche 7 bis 9, ferner mit
einem Druckerhöhungsschritt des Steuerns des Bypassventils (35) so, dass ein Druck des Drucköls in der Hochdruck-Ölleitung (30) erreicht wird, wobei der Druck so ist, dass ein Anfangsdrehmoment, das zum Starten einer Rotation des hydraulischen Motors (20) in einem gestoppten Zustand erforderlich ist, erhältlich ist, nachdem die Rotation der hydraulischen Pumpe (10) gestartet ist, während eines Anlaufs des hydraulischen Getriebes (6).

11. Ein Verfahren zum Betrieb der Vorrichtung zur Stromerzeugung aus erneuerbarer Energie (1) gemäß Anspruch 5 oder 6, mit
einem Drehmomenteinstellschritt des Steuerns eines Drucks des Drucköls in der Hochdruck-Ölleitung (30) zum Einstellen eines Drehmoments (τ) der hydraulischen Pumpe (10) auf eine Zielwert auf der Basis einer optimalen Betriebskurve (60), die eine Beziehung zwischen einer Rotationsgeschwindigkeit (ωR) der Rotationswelle (5) und dem Drehmoment (τ) der hydraulischen Pumpe (10) definiert, wenn die Rotationsgeschwindigkeit (ωR) der Rotationswelle (5) nicht höher ist als einen Nenn-Rotationsgeschwindigkeit.

## Revendications

1. Transmission (6) hydraulique, comprenant :
une pompe (10) hydraulique du type volumétrique fixe, configurée pour être entraînée par de l'énergie mécanique apportée à un arbre (5) de rotation;
un moteur (20) hydraulique, configuré pour être entraîné par de l'huile sous pression provenant de la pompe (10) hydraulique;
une ligne (30) d'huile de haute pression, disposée entre une sortie de la pompe (10) hydraulique et une entrée du moteur (20) hydraulique pour conduire l'huile sous pression de la pompe (10) hydraulique au moteur (20) hydraulique;
une ligne (31) d'huile de basse pression, disposée entre une sortie du moteur (20) hydraulique et une entrée de la pompe (10) hydraulique pour conduire de l'huile de travail du moteur (20) hydraulique à la pompe (10) hydraulique, l'huile de travail ayant une pression plus basse qu'une pression de l'huile sous pression;
une ligne (34) de dérivation, reliant la ligne (30) d'huile de haute pression et la ligne (31) d'huile de basse pression;
une soupape (35) de dérivation, montée dans la ligne (34) de dérivation;
et
une partie (54) de commande de la soupape de dérivation, configurée pour commander la soupape (35) de dérivation pour régler la pression de l'huile sous pression dans la ligne (30) d'huile de haute pression,
dans laquelle la pompe ((10) hydraulique comprend une pluralité de pistons (12), une pluralité de cylindres (11), configurés pour guider les pistons (12) respectifs en aller et retour et former une pluralité de chambres (13) de travail avec la pluralité de pistons (12), et des soupapes (15) de haute pression et des soupapes (16) de basse pression, prévues pour la pluralité des chambres (13) de travail,
une soupape de retenue est utilisée comme soupape (15) de haute pression et la soupape (16) de basse pression prévue pour chacune de la pluralité des chambres de travail de la pompe hydraulique,
dans laquelle les soupapes (15) de haute pression de la pluralité de chambres (13) de travail sont des soupapes de retenue configurées pour permettre seulement un courant de l'huile de travail allant des chambres (13) de travail à la ligne (30) d'huile de haute pression,
dans laquelle les soupapes (16) de basse pression de la pluralité des chambres (13) de travail sont des soupapes de retenue configurées pour permettre seulement un courant de l'huile de travail allant de la ligne (31) d'huile de basse pression aux chambres (13) de travail et
dans laquelle la partie (54) de commande de la soupape de dérivation est configurée pour, si une vitesse (ωR) de rotation de l'arbre (5) de rotation n'est pas plus grande qu'une vitesse de rotation nominale, commander la pression de l'huile sous pression dans la ligne (30) d'huile de haute pression pour régler un couple (τ) de la pompe (10) hydraulique à une valeur cible sur la base d'une courbe (60) de fonctionnement optimum, qui définit une relation entre la vitesse (ωR) de rotation de l'arbre (5) de rotation et le couple (τ) de la pompe (10) hydraulique.

2. Transmission (6) hydraulique suivant la revendication 1,
dans laquelle la partie (54) de commande de la soupape de dérivation est configurée pour :
calculer la valeur cible du couple de la pompe (10) hydraulique, en appliquant un résultat de mesure de la vitesse (ωR) de rotation de l'arbre (5) de rotation à la courbe (60) de fonctionnement optimum, qui définit la relation entre la vitesse (ωR) de rotation de l'arbre (5) de rotation et le couple (τ) de la pompe (10) hydraulique,
calculer une valeur cible de pression de la ligne (30) d'huile de haute pression pour obtenir la valeur cible du couple et
calculer une instruction de degré d'ouverture de la soupape (35) de dérivation sur la base d'une différence entre la valeur cible de pression et un résultat de mesure d'une pression (Pa) de la ligne (30) d'huile de haute pression.

3. Transmission (6) hydraulique suivant la revendication 1 ou 2,
dans laquelle la partie (54) de commande de la soupape de dérivation est configurée pour mettre la soupape (35) de dérivation en position complètement ouverte, au moins lorsque la pompe (10) hydraulique, dans un état à l'arrêt, commence à tourner pendant un démarrage de la transmission (6) hydraulique.

4. Transmission (6) hydraulique suivant l'une quelconque des revendications 1 à 3,
dans laquelle la partie (54) de commande de la soupape de dérivation est configurée pour commander la soupape (35) de dérivation de manière à obtenir une pression de l'huile sous pression dans la ligne (30) d'huile de haute pression, la pression étant telle qu'un couple initial, exigé pour faire commencer une rotation du moteur (20) hydraulique à l'état à l'arrêt, peut être obtenu après qu'une rotation de la pompe (10) hydraulique a commencé pendant un démarrage de la transmission (6) hydraulique.

5. Installation de production d'énergie de type (1) renouvelable, comprenant :
au moins une pale (2);
un arbre (5) de rotation, configuré pour être mis en rotation par de l'énergie renouvelable reçue par la au moins une pale (2);
une génératrice (8), configurée pour produire de la puissance électrique en utilisant de l'énergie de rotation de l'arbre (5) de rotation et
la transmission (6) hydraulique suivant l'une quelconque des revendications 1 à 4, configurée pour transmettre l'énergie de rotation de l'arbre (5) de rotation à la génératrice (8).

6. Installation de production d'énergie de type (1) renouvelable suivant la revendication 5, dans laquelle l'installation de production d'énergie de type (1) renouvelable est une installation de production d'énergie à éolienne, configurée pour produire de l'énergie électrique à la génératrice (8) en utilisant de l'énergie du vent reçue du vent par la au moins une pale (2), le vent étant une source d'énergie renouvelable.

7. Procédé pour faire fonctionner une transmission (6) hydraulique, comprenant :
une pompe (10) hydraulique du type volumétrique fixe, configurée pour être entraînée par de l'énergie mécanique apportée à un arbre (5) de rotation;
un moteur (20) hydraulique, configuré pour être entraîné par de l'huile sous pression provenant de la pompe (10) hydraulique;
une ligne (30) d'huile de haute pression, disposée entre une sortie de la pompe (10) hydraulique et une entrée du moteur (20) hydraulique;
une ligne (31) d'huile de basse pression, disposée entre une sortie du moteur (20) hydraulique et une entrée de la pompe (10) hydraulique;
une ligne (34) de dérivation, reliant la ligne (30) d'huile de haute pression et la ligne (31) d'huile de basse pression et
une soupape (35) de dérivation, montée dans la ligne (34) de dérivation;
dans laquelle la pompe ((10) hydraulique comprend une pluralité de pistons (12), une pluralité de cylindres (11), configurés pour guider les pistons (12) respectifs en aller et retour et former une pluralité de chambres (13) de travail avec la pluralité de pistons (12) et des soupapes (15) de haute pression et des soupapes (16) de basse pression, prévues pour la pluralité des chambres (13) de travail,
une soupape de retenue est utilisée comme soupape (15) de haute pression et la soupape (16) de basse pression prévue pour chacune de la pluralité des chambres de travail de la pompe hydraulique,
dans laquelle les soupapes (15) de haute pression de la pluralité de chambres (13) de travail sont des soupapes de retenue configurées pour permettre seulement un courant de l'huile de travail allant des chambres (13) de travail à la ligne (30) d'huile de haute pression,
dans laquelle les soupapes (16) de basse pression de la pluralité des chambres (13) de travail sont des soupapes de retenue configurées pour permettre seulement un courant de l'huile de travail allant de la ligne (31) d'huile de basse pression aux chambres (13) de travail,
le procédé comprenant :
un stade d'ajustement du couple, dans lequel on commande une pression de l'huile sous pression dans la ligne (30) d'huile de haute pression, en commandant la soupape (35) de dérivation pour ajuster un couple (τ) de la pompe (10) hydraulique à une valeur cible sur la base d'une courbe (60) de fonctionnement optimum, qui définit une relation entre une vitesse (ωR) de rotation de l'arbre (5) de rotation et le couple (τ) de la pompe (10) hydraulique, si la vitesse (ωR) de rotation de l'arbre (5) de rotation n'est pas plus grande qu'une vitesse de rotation nominale.

8. Procédé pour faire fonctionner une transmission (6) hydraulique suivant la revendication 7,
dans lequel le stade d'ajustement du couple comprend :
calculer la valeur cible du couple de la pompe (10) hydraulique en appliquant le résultat de mesure de la vitesse (ωR) de rotation de l'arbre (5) de rotation à la courbe (60) de fonctionnement optimum, qui définit la relation entre la vitesse (ωR) de rotation de l'arbre (5) de rotation et le couple (τ) de la pompe (10) hydraulique,
calculer une valeur cible de la pression de la ligne (30) d'huile de haute pression pour obtenir la valeur cible du couple et
calculer une instruction de degré d'ouverture de la soupape (35) de dérivation sur la base d'une différence entre la valeur cible de la pression et un résultat de mesure d'une pression (Pa) de la ligne (30) d'huile de haute pression.

9. Procédé pour faire fonctionner une transmission (6) hydraulique suivant la revendication 7 ou 8, comprenant, en outre,
un stade de démarrage de la rotation, dans lequel on fait commencer une rotation de la pompe (10) hydraulique, alors que la soupape (35) de dérivation est mise à l'état entièrement ouvert pendant un démarrage de la transmission (6) hydraulique.

10. Procédé pour faire fonctionner une transmission (6) hydraulique suivant l'une quelconque des revendications 7 à 9, comprenant, en outre,
un stade d'élévation de la pression, dans lequel on commande la soupape (35) de dérivation, de manière à obtenir une pression de l'huile sous pression dans la ligne (30) d'huile de haute pression, la pression étant telle qu'un couple initial, exigé pour faire commencer une rotation du moteur (20) hydraulique à l'état à l'arrêt, peut être obtenu, après qu'une rotation de la pompe (10) hydraulique a commencé pendant un démarrage de la transmission (6) hydraulique.

11. Procédé pour faire fonctionner une transmission (6) hydraulique suivant la revendication 5 ou 6, comprenant
un stade d'ajustement du couple, dans lequel on commande une pression de l'huile sous pression dans la ligne (30) d'huile de haute pression pour ajuster un couple (τ) de la pompe (10) hydraulique à une valeur cible sur la base d'une courbe (60) de fonctionnement optimum, qui définit une relation entre une vitesse (ωR) de rotation de l'arbre (5) de rotation et le couple (τ) de la pompe (10) hydraulique, si la vitesse (ωR) de rotation de l'arbre (5) de rotation n'est pas plus grande qu'une vitesse de rotation nominale.
